# EUROPÄISCHE PATENTSCHRIFT

(11) **EP 3 655 134 B1**
(45) Veröffentlichungstag und Bekanntmachung des Hinweises auf die Patenterteilung: **05.05.2021**
(21) Anmeldenummer: 18742962.6
(22) Anmeldetag: 10.07.2018
(51) Int. Cl.: B01D 53/30, B01D 53/34, B01D 53/62, B01D 53/72, B01D 53/76, B01D 53/86, C04B 7/36, F23G 7/06

(54) **VERFAHREN ZUM REINIGEN EINES GASSTROMS UND ENTSPRECHENDE ZEMENTHERSTELLUNGSANLAGE**
METHOD FOR CLEANING A GAS STREAM AND CORRESPONDING CEMENT MANUFACTURE PLANT
PROCÉDÉ DE NETTOYAGE D'UN COURANT DE GAZ ET FABRIQUE DE CIMENT CORRESPONDANTE

(30) Priorität: 19.07.2017 DE 102017212322
(43) Veröffentlichungstag der Anmeldung: 27.05.2020
(73) Patentinhaber: thyssenkrupp Industrial Solutions AG, 45143 Essen (DE); thyssenkrupp AG, 45143 Essen (DE)
(72) Erfinder: STENDER, Timo, 58730 Fröndenberg (DE); BORDEI, Valentina, 59063 Hamm (DE); FLASSPÖHLER, Melanie, 44141 Dortmund (DE)
(74) Vertreter: thyssenkrupp Intellectual Property GmbH
(86) Internationale Anmeldenummer: PCT/EP2018/068644
(87) Internationale Veröffentlichungsnummer: WO 2019/016029

(56) Entgegenhaltungen:
- EP-A1- 1 004 553
- WO-A1-2015/189104
- WO-A1-2016/173785
- DE-A1- 19 720 205
- DE-A1-102011 114 292
- DE-A1-102012 023 257
- DE-A1-102014 106 991
- US-A- 4 640 681

## Beschreibung

Die Erfindung betrifft Verfahren zum Reinigen eines Gasstroms. Des Weiteren betrifft die Erfindung eine Zementherstellungsanlage mit einem System zum Reinigen eines Gasstroms.

Die Schadstoffkonzentrationen in den Abgasen der Zementindustrie werden zunehmend mit sinkenden Emissionsgrenzwerten limitiert. Hierzu zählen neben Stickoxiden und Ammoniak auch insbesondere Kohlenmonoxid und Kohlenwasserstoffe. Typische Verfahren zur Minderung der beiden letztgenannten sind RTO (Regenerative Thermische Oxidation) und RCO (Regenerative Katalytische Oxidation), die zur Minderung der Konzentration an Kohlenwasserstoffen und/oder Kohlenmonoxid in dem Abgas eingesetzt werden. Eine solche Anlage ist beispielsweise aus der WO2016173785A1 bekannt. Die WO 2015/189104 A1 offenbart ebenfalls eine Anlage des Standes der Technik.

Insbesondere die RTO, in der eine Aufheizung auf Temperaturen von ca. 850 °C erfolgt, besitzt einen hohen thermischen Energiebedarf. Die Konzentrationen von Kohlenmonoxid und Kohlenwasserstoffen können prozess- und rohmaterialbedingt stark schwanken, sodass eine ausreichende Minderung der Kohlenwasserstoffe und/oder Kohlenmonoxid häufig nicht oder nur unter einem sehr hohen Energieaufwand erreicht wird.

Davon ausgehend ist es Aufgabe der vorliegenden Erfindung, eine Verfahren und eine Vorrichtung bereitzustellen, die eine zuverlässige Minderung der Kohlenwasserstoffe und/oder Kohlenmonoxid in Abgasen sicherstellt und gleichzeitig den Energieaufwand relativ zu bekannten Systemen reduziert.

Diese Aufgabe wird erfindungsgemäß durch ein Verfahren mit den Merkmalen des unabhängigen Verfahrensanspruchs 1 und eine Vorrichtung mit den Merkmalen des unabhängigen Vorrichtungsanspruchs 8 gelöst. Vorteilhafte Weiterbildungen ergeben sich aus den abhängigen Ansprüchen.

Ein Verfahren zum Reinigen eines Gasstroms, insbesondere eines Abgasstroms einer Anlage zur thermische Materialbehandlung mineralischer Materialien, umfasst nach einem ersten Aspekt das Behandeln des Gasstroms in einer Reinigungsvorrichtung mittels regenerativer thermischer Oxidation und/ oder regenerativer katalytischer Oxidation. Rohmaterial wird in einem Vorwärmer vorgewärmt und/oder in einem Calcinator entsäuert, wobei das vorgewärmte und/oder entsäuerte Rohmaterial in einem Ofen zu Zementklinker gebrannt wird und der Gasstrom aus dem Abgasstrom des Ofens und/ oder des Calcinators gebildet wird. Des Weiteren umfasst das Verfahren die Schritte:
- Ermitteln der Konzentration von Kohlenwasserstoffen und/oder Kohlenmonoxid in dem Gasstrom und
- Zuführen von Wärme in den Gasstrom mittels einer innerhalb der Reinigungsvorrichtung angeordneten Brenneinrichtung, wobei die Wärmezufuhr in Abhängigkeit der ermittelten Konzentration von Kohlenwasserstoffen und/oder Kohlenmonoxid gesteuert/ geregelt wird
- Zuführen von Brennstoff zu dem Ofen (44) und/ oder dem Calcinator (48) und
- Steuern/ Regeln der Brennstoffzufuhr zu dem Ofen (44) und/ oder dem Calcinator (48) in Abhängigkeit der ermittelten Konzentration von Kohlenwasserstoffen und/oder Kohlenmonoxid in dem Gasstrom (20; 60), wobei die ermittelte Konzentration von Kohlenwasserstoffen und/oder Kohlenmonoxid in dem Gasstrom (20; 60) mit einem vorbestimmten Grenzwert verglichen wird und bei einem Überschreiten des Grenzwertes die Wärmezufuhr in den Gasstrom erhöht und/ oder der Kohlenstoffgehalt des Rohmaterials und/ oder des Brennstoffs verringert und/ oder die Brennstoffzufuhr zu dem Ofen und/ oder dem Calcinator variiert wird

Eine Anlage zur thermischen Materialbehandlung mineralischer Materialien umfasst erfindungsgemäß eine Zementherstellungsanlage.

Bei dem Abgasstrom einer Zementanlage handelt es sich vorzugweise um den aus einem Vorwärmer austretenden Abgasstrom, der zumindest teilweise aus Abgasen eines Ofens und/ oder eines Calcinators besteht. Eine Reinigungsvorrichtung ist beispielsweise eine Kammer, wobei die Brenneinrichtung innerhalb der Reinigungsvorrichtung angeordnet ist. Die Brenneinrichtung ist vorzugsweise zur Verbrennung von gasförmigen und flüssigen Brennstoffen wie Erdgas oder Erdölausgebildet und mit einer Zuführung der Brennstoffe verbunden.

Die Konzentration von Kohlenwasserstoffen und/oder Kohlenmonoxid wird durch eine oder mehrere Messeinrichtungen ermittelt, die in Strömungsrichtung des Gasstroms vor oder hinter der Reinigungsvorrichtung angeordnet sein können. Bei den Messeinrichtungen handelt es sich beispielsweise um Infrarot-Analysatoren zur CO Bestimmung oder Flammenionisationsdetektoren zur Kohlenwasserstoffbestimmung.

Bei einem Betrieb der Reinigungsvorrichtung, die den Gasstrom mittels regenerativer thermischer Oxidation und/ oder regenerativer katalytischer Oxidation behandelt, wird ein autothermer Betrieb bevorzugt. In einem solchen autothermen Betrieb ist die Konzentration von Kohlenwasserstoffen und/oder Kohlenmonoxid in einem bestimmten bevorzugten Bereich von etwa 500 - 10.000 mg/Nm³, wobei eine Oxidation der Kohlenwasserstoffe und/oder Kohlenmonoxid ohne Wärmezufuhr stattfindet. Da der autotherme Betrieb der Reinigungsvorrichtung allerdings einen Idealzustand beschreibt, ist es in der Praxis notwendig, Energie in Form von Wärme der Reinigungsvorrichtung zuzuführen, um eine auseichende Minderung der Schadstoffe aus Kohlenwasserstoffen und/oder Kohlenmonoxid zu gewährleisten. Es wird allerdings ein nahezu autothermer Betrieb bevorzugt, um einen möglichst geringen Energieeintrag, insbesondere eine geringe Wärmezufuhr, in die Reinigungsvorrichtung zu erreichen. Das Ermitteln der Konzentration von Kohlenwasserstoffen und/oder Kohlenmonoxid in dem Gasstrom ermöglicht einen Rückschluss auf die erforderliche Wärmezufuhr, um eine ausreichende Oxidation der Kohlenwasserstoffe und/oder Kohlenmonoxid zu erreichen. Durch eine Steuerung/ Regelung der Wärmezufuhr in die Reinigungsvorrichtung in Abhängigkeit der ermittelten Konzentration von Kohlenwasserstoffen und/oder Kohlenmonoxid wird eine besonders effiziente Minderung der Schadstoffe in dem Gasstrom erreicht, da lediglich die zur ausreichenden Oxidationsrate der Kohlenwasserstoffe und/oder Kohlenmonoxid benötigte Energie, insbesondere Wärme, der Reinigungsvorrichtung zugeführt wird.

Erfindungsgemäß wird die Temperatur des Gasstroms in der Reinigungsvorrichtung ermittelt und die Wärmezufuhr in Abhängigkeit der ermittelten Temperatur gesteuert/ geregelt. Beispielsweise erfolgt die regenerative thermische Oxidation bei einer Temperatur von etwa 800-1100°C insbesondere 800-900°C. Die regenerative katalytische Oxidation erfolgt optimalerweise bei einer Temperatur von etwa 200-600°C. Ist die Temperatur innerhalb der Reinigungsvorrichtung bei der regenerativen katalytischen Oxidation oder der regenerativen thermischen Oxidation unterhalb des entsprechenden Temperaturwerts oder Temperaturintervalls, wird Wärme der Reinigungsvorrichtung zugeführt. Ist die Temperatur innerhalb der Reinigungsvorrichtung bei der regenerativen katalytischen Oxidation oder der regenerativen thermischen Oxidation oberhalb des entsprechenden Temperaturwerts oder Temperaturintervalls, wird die Wärmezufuhr der Reinigungsvorrichtung reduziert, sodass ein Betrieb bei einer optimalen Temperatur sichergestellt ist.

Die ermittelte Konzentration wird von Kohlenwasserstoffen und/oder Kohlenmonoxid in dem Gasstrom mit einem vorbestimmten Grenzwert verglichen und bei einem Überschreiten des Grenzwertes die Wärmezufuhr in den Gasstrom variiert, insbesondere erhöht oder verringert. Insbesondere wird die Konzentration von Kohlenwasserstoffen und/oder Kohlenmonoxid in Strömungsrichtung des Gasstroms stromabwärts der Reinigungsvorrichtung ermittelt, wobei der Grenzwert beispielsweise etwa 50 mg/Nm³ beträgt. Ein solcher Grenzwert orientiert sich an den aktuellen Vorgaben zu den Emissionsgrenzwerten und wird an diesen angepasst.

Das Rohmaterial, insbesondere Rohmehl, wird in einem Vorwärmer vorgewärmt und/ oder in einem Calcinator entsäuert und das vorgewärmte und/ oder entsäuerte Rohmaterial wird in einem Ofen zu Zementklinker gebrannt. Der Gasstrom wird aus dem Abgasstrom des Ofens und/ oder Calcinators gebildet. Des Weiteren wird der Kohlenstoffgehalt des Rohmaterials, das in den Vorwärmer, den Ofen und/ oder den Calcinator aufgegeben wird, in Abhängigkeit der ermittelten Konzentration von Kohlenwasserstoffen und/oder Kohlenmonoxid in dem Gasstrom gesteuert/ geregelt. Der Kohlenstoffgehalt des Rohmaterials wird insbesondere durch das Zugeben von Ersatzstoffen, wie beispielsweise Gießereialtsand, Klärschlamm oder anderen Stoffe mit einem hohen Kohlenstoffgehalt, erhöht. Beispielsweise wird das Rohmaterial vor der Aufgabe in den Vorwärmer einer Mahleinrichtung zugeführt, wobei das Rohmaterial in der Mahleinrichtung mittels des den Vorwärmer verlassenden Gasstroms getrocknet wird. Der Kohlenstoffgehalt des Rohmaterials, das der Mahleinrichtung zugeführt wird, wird vorzugsweise in Abhängigkeit der ermittelten Konzentration von Kohlenwasserstoffen und/oder Kohlenmonoxid gesteuert/geregelt. Eine Zugabe von Ersatzstoffen, insbesondere Kohlenstoff-haltige Komponenten, ist beispielsweise nach dem Vorwärmer oder in der Mahleinrichtung möglich. Beispielsweise verdampfen in der Mahleinrichtung flüssige kohlenstoffhaltige Stoffe, sodass die Kohlenstoffverbindungen mit dem Gasstrom aus der Mahleinrichtung ausgetragen werden. Beispielsweise wird der den Vorwärmer verlassende Gasstrom in einer Kühleinrichtung, insbesondere einem Kühlturm, gekühlt, wobei die Kühlung beispielsweise mittels Klärschlamm oder Lösemitteln als Kühlmittel erfolgt. Der Klärschlamm weist vorzugsweise hohe Wasseranteile auf. Bei der Kühlung mit Ersatzstoffen können Kohlenstoffverbindungen freigesetzt werden, die mit Abgas zur Reinigungsvorrichtung geführt werden. Der Kohlenstoffgehalt im Gasstrom, ist somit abhängig von der Zuführung und dem Kohlenstoffgehalt des Kühlmittels. In der Kühleinrichtung fällt typischerweise Staub aus dem Gasstrom an, der dort auch ausgetragen wird. Der in der Kühleinrichtung aus dem Gasstrom ausgeschiedene Staub wird vorzugsweise anschließend dem Vorwärmer als Rohmehl zugeführt. Wird Staub aus dem Gasstrom ausgeschieden, der einen Kohlenstoffanteil aufweist, ist dieser abhängig von dem Kohlenstoffanteil des Ersatzstoffes. Der Kohlenstoffgehalt des Kühlmittels einer dem Vorwärmer in Strömungsrichtung des Abgases des Ofens nachgeschalteten Kühleinrichtung wird vorzugsweise in Abhängigkeit der ermittelten Konzentration von Kohlenwasserstoffen und/oder Kohlenmonoxid gesteuert/geregelt. Die Ersatzstoffe können auch in den Vorwärmer oder direkt in den Ofen aufgegeben werden. Ein Anstieg des Kohlenstoffgehalts des Rohmaterials sorgt für einen Anstieg der Konzentration von Kohlenwasserstoffen und/oder Kohlenmonoxid in dem Abgasstrom, sodass auch die Regelung des Kohlenstoffgehalts zu einer optimalen Einstellung der Konzentration von Kohlenwasserstoffen und/oder Kohlenmonoxid im Abgas führt.

Eine erhöhte Menge an Rohmaterial in dem Vorwärmer, Calcinator und/ oder dem Ofen resultiert in einer erhöhten Konzentration von Kohlenwasserstoffen und/oder Kohlenmonoxid in dem Abgasstrom, sodass eine Steuerung/ Regelung der Zufuhr von Rohmaterial in Abhängigkeit der ermittelten Konzentration von Kohlenwasserstoffen und/oder Kohlenmonoxid in dem Gasstrom eine zuverlässige Möglichkeit der Einstellung der optimalen Konzentration von Kohlenwasserstoffen und/oder Kohlenmonoxid im Abgas darstellt, um eine energiearme Schadstoffminderung zu erreichen.

Dem Ofen und/ oder dem Calcinator wird Brennstoff zugeführt und die Brennstoffzufuhr zu dem Ofen und/ oder dem Calcinator wird in Abhängigkeit der ermittelten Konzentration von Kohlenwasserstoffen und/oder Kohlenmonoxid in dem Gasstrom gesteuert/ geregelt. Der Ofen kann auch einen Steigschacht umfassen, der in Strömungsrichtung des Rohmehls vor dem Ofeneinlauf angeordnet ist. Die Aufgabe des Brennstoffs erfolgt beispielsweise in den Ofeneinlauf und/ oder den Steigschacht. Insbesondere wird der Kohlenstoffgehalt des Brennstoffs in Abhängigkeit der ermittelten Konzentration von Kohlenwasserstoffen und/oder Kohlenmonoxid gesteuert/ geregelt, wobei beispielsweise der Kohlenstoffgehalt des Brennstoffs verringert wird, wenn ein Grenzwert von etwa 50 mg/Nm³ stromabwärts der Reinigungsvorrichtung überschritten wird. Eine erhöhte Menge an Brennstoff und/ oder des Kohlenstoffgehalts des Brennstoffs resultiert in einer erhöhten Konzentration von Kohlenwasserstoffen und/oder Kohlenmonoxid in dem Abgasstrom, sodass eine Steuerung/ Regelung der Zufuhr von Brennstoff in Abhängigkeit der ermittelten Konzentration von Kohlenwasserstoffen und/oder Kohlenmonoxid in dem Gasstrom eine zuverlässige Möglichkeit der Einstellung der optimalen Konzentration von Kohlenwasserstoffen und/oder Kohlenmonoxid im Abgas darstellt, um eine energiearme Schadstoffminderung zu erreichen.

Die Konzentration von Kohlenwasserstoffen und/oder Kohlenmonoxid in dem Gasstrom wird gemäß einer weiteren Ausführungsform in Strömungsrichtung des Gasstroms stromabwärts der Reinigungsvorrichtung ermittelt. Hinter der Reinigungsvorrichtung sollte die Konzentration von Kohlenwasserstoffen und/oder Kohlenmonoxid in dem Gasstrom die zulässigen Grenzwerte von z.B. 50mg/Nm³ nicht überschreiten.

Gemäß einer weiteren Ausführungsform wird die Konzentration von Kohlenwasserstoffen und/oder Kohlenmonoxid in dem Gasstrom in Strömungsrichtung des Gasstroms stromaufwärts der Reinigungsvorrichtung ermittelt. Insbesondere wird die Konzentration von Kohlenwasserstoffen und/oder Kohlenmonoxid in dem Gasstrom zusätzlich zu der Ermittlung stromabwärts der Reinigungsvorrichtung auch stromaufwärts der Reinigungsvorrichtung ermittelt.

Die Zufuhr von Wärme in den Gasstrom, die Zufuhr von Rohmaterial in den Vorwärmer, den Ofen und/ oder den Calcinator und/ oder die Brennstoffzufuhr zu dem Ofen und/ oder dem Calcinator wird vorzugsweise derart gesteuert/ geregelt, dass die regenerative thermische Oxidation nahezu autotherm abläuft. Eine nahezu autotherme regenerative thermische Oxidation bietet den Vorteil einer besonders geringen Wärmezufuhr in die Reinigungsvorrichtung.

Die ermittelte Konzentration von Kohlenwasserstoffen und/oder Kohlenmonoxid in dem Gasstrom wird mit einem vorbestimmten Grenzwert verglichen und bei einem Überschreiten des Grenzwertes die Wärmezufuhr in den Gasstrom und/ oder der Kohlenstoffgehalt des Rohmaterials und/ oder des Brennstoffs und/ oder die Brennstoffzufuhr zu dem Ofen und/ oder dem Calcinator variiert, insbesondere wird die Wärmezufuhr erhöht und/ oder der Kohlenstoffgehalt verringert. Ein solcher Grenzwert liegt beispielsweise bei 50 mg/Nm³.

Der Gasstrom wird gemäß einer weiteren Ausführungsform in der Reinigungsvorrichtung mittels regenerativer thermischer Oxidation und anschließend mittels regenerativer katalytischer Oxidation behandelt. Dies bietet den Vorteil, dass die Reinigungsvorrichtung mittels regenerativer thermischer Oxidation nicht vollständig oxidierten Kohlenwasserstoffe und/oder Kohlenmonoxid anschließend mittels regenerativer katalytischer Oxidation behandelt werden, wobei die katalytische Oxidation eine geringere Temperatur benötigt und eine Oxidation der restlichen Kohlenwasserstoffe und/oder Kohlenmonoxid ermöglicht. Daraus ergibt sich eine vollständigere und zuverlässige Oxidation der Kohlenwasserstoffe und/oder Kohlenmonoxid.

Gemäß einer weiteren Ausführungsform wird der Gasstrom vor dem Eintritt in die Reinigungsvorrichtung gekühlt und/ oder entstaubt. Eine Entstaubung des Gasstroms ist vorteilhaft, um eine Verstopfung der Reinigungsvorrichtung, insbesondere eines Wabenkörpers zum regenerativen Wärmetausch und/ oder des Katalysators einer RCO, zu verhindern. Beispielsweise wird eine Hochtemperaturentstaubung bei einer Temperatur größer als 200°C durchgeführt, um eine anschließende Erwärmung des Gasstroms zur Durchführung der RCO und/ oder RTO zu vermeiden. Eine Kühlung des Gasstroms wird vorzugsweise vor einer Entstaubung durchgeführt, da die anschließende Entstaubung bei niedrigeren Temperaturen von etwa 100-200°C betrieben werden kann.

Ein System zum Reinigen eines Gasstroms, insbesondere eines Abgasstroms einer Anlage zur thermische Materialbehandlung mineralischer Materialien, weist eine Reinigungsvorrichtung, die derart ausgebildet ist, dass sie den Gasstrom mittels regenerativer thermischer Oxidation und/oder regenerativer katalytischer Oxidation behandelt, und eine Messeinrichtung auf zum Ermitteln der Konzentration von Kohlenmonoxid und/ oder Kohlenwasserstoffen in dem Gasstrom. Die Reinigungsvorrichtung weist eine Brenneinrichtung zur Zufuhr von Wärme in den Gasstrom auf, wobei eine Steuerungs-/ Regelungseinrichtung vorgesehen ist, die derart ausgebildet ist, dass sie die Wärmezufuhr in Abhängigkeit der mittels der Messeinrichtung ermittelten Konzentration von Kohlenmonoxid und/ oder Kohlenwasserstoffen steuert/ regelt.

Die mit Bezug auf das Verfahren zum Reinigen eines Gasstroms beschriebenen Vorteile und Erläuterungen treffen in vorrichtungsgemäßer Entsprechung auch auf das System zum Reinigen eines Gasstroms zu.

Die Messeinrichtung ist beispielsweise in Strömungsrichtung des Gasstroms stromabwärts und/ oder stromaufwärts der Reinigungsvorrichtung angeordnet. Beispielsweise sind zwei Messeirichtungen vorgesehen, wobei eine erste Messeinrichtung stromaufwärts der Reinigungsvorrichtung und eine zweite Messeinrichtung stromabwärts der Reinigungsvorrichtung angeordnet ist.

Die Erfindung umfasst ferner eine Zementherstellungsanlage mit einem System zum Reinigen eines Gasstroms, wie voran beschrieben. Die Zementherstellungsanlage umfasst einen Vorwärmer zum Vorwärmen von Rohmaterial, einen Ofen zum Brennen des Rohmaterials zu Klinker und/oder einen Calcinator zum Entsäuern des Rohmaterials, wobei der Gasstrom durch das Abgas des Ofens gebildet wird und wobei die Steuerung-/ Regelungseinrichtung derart ausgebildet ist, dass sie den Kohlenstoffgehalt von Rohmaterial in den Vorwärmer, den Ofen und/ oder den Calcinator in Abhängigkeit der ermittelten Konzentration von Kohlenwasserstoffen und/oder Kohlenmonoxid in dem Gasstrom steuert/ regelt. Die Zementherstellungsanlage weist einen Vorwärmer zum Vorwärmen von Rohmaterial, einen Ofen zum Brennen des Rohmaterials zu Klinker und/oder einen Calcinator zum Entsäuern des Rohmaterials auf, wobei der Gasstrom durch das Abgas des Ofens gebildet wird und wobei der Ofen und der Calcinator jeweils eine Brennstoffzufuhr zur Zuführung von Brennstoff in den Calcinator und den Ofen aufweist und die Steuerungs-/ Regelungseinrichtung derart ausgebildet ist, dass sie die Brennstoffmenge zu dem Calcinator und/ oder dem Ofen in Abhängigkeit der ermittelten Konzentration von Kohlenwasserstoffen und/oder Kohlenmonoxid in dem Gasstrom steuert/ regeltdie ermittelte Konzentration von Kohlenwasserstoffen und/oder Kohlenmonoxid in dem Gasstrom mit einem vorbestimmten Grenzwert vergleicht und bei einem Überschreiten des Grenzwertes die Wärmezufuhr in den Gasstrom erhöht und/ oder der Kohlenstoffgehalt des Rohmaterials und/ oder des Brennstoffs verringert und/ oder die Brennstoffzufuhr zu dem Ofen und/ oder dem Calcinator variiert.

Erfindungsgemäß weist der Ofen und der Calcinator jeweils eine Brennstoffzufuhr zur Zuführung von Brennstoff in den Calcinator und den Ofen auf und die Steuerungs-/ Regelungseinrichtung ist derart ausgebildet, dass sie die Brennstoffmenge zu dem Calcinator und/ oder dem Ofen in Abhängigkeit der ermittelten Konzentration von Kohlenwasserstoffen und/oder Kohlenmonoxid in dem Gasstrom steuert/ regelt. Insbesondere ist die Steuerungs-/ Regelungseinrichtung derart ausgebildet, dass sie den Kohlenstoffgehalt des Brennstoffs in Abhängigkeit der ermittelten Konzentration von Kohlenwasserstoffen und/oder Kohlenmonoxid in dem Gasstrom steuert/ regelt.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines Systems zum Reinigen eines Gasstroms gemäß einem Ausführungsbeispiel.
Fig. 2 zeigt eine schematische Darstellung einer Zementherstellungsanlage mit einem System zum Reinigen eines Gasstroms gemäß einem Ausführungsbeispiel.
Fig. 3 zeigt eine schematische Darstellung einer Zementherstellungsanlage mit einem System zum Reinigen eines Gasstroms gemäß einem weiteren Ausführungsbeispiel.

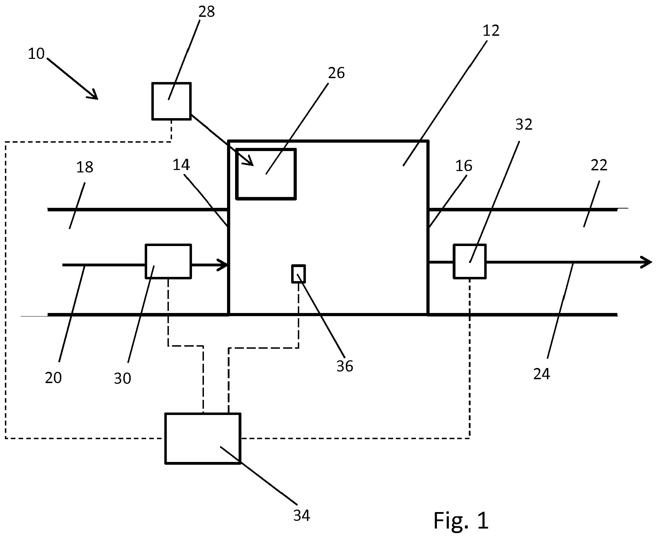

In Fig. 1 ist ein System 10 zum Reinigen eines Gasstroms gezeigt. Insbesondere wird ein solches System zum Reinigen eines Abgasstroms einer Anlage zur thermischen Materialbehandlung mineralischer Materialien, wie erfindungsgemäß einer Zementanlage oder (nicht von der Erfindung umfasst) einem Kalkofen eingesetzt. Das System 10 umfasst eine Reinigungsvorrichtung 12, bei der es sich beispielsweise um eine Kammer handelt und die einen Gaseinlass 14 und einen Gasauslass 16 aufweist. Der Gaseinlass 14 ist beispielhaft an einer ersten Seite der Reinigungsvorrichtung 12 angeordnet und mit einer Leitung 18, insbesondere einer Rohrleitung, zur Führung eines Gasstroms 20 verbunden. Der beispielhaft an einer gegenüberliegenden Seite der Reinigungsvorrichtung 12 angeordnete Gasauslass 16 ist mit einer weiteren Leitung 22 zur Führung eines Gasstroms, insbesondere eines gereinigten Gasstroms 24, verbunden.

Innerhalb der Reinigungsvorrichtung ist eine Brenneinrichtung 26 angeordnet. Bei der Brenneinrichtung 26 handelt es sich beispielsweise um eine Einrichtung zum Verbrennen von insbesondere gasförmigen und/oder flüssigen Brennstoffen, wie beispielsweise Erdgas oder Schweröl. Insbesondere ist die Brenneinrichtung 26 ein Gasbrenner. Die Brenneinrichtung ist beispielhaft an der oberen gaseinlassseitigen Ecke der Reinigungsvorrichtung 12 angeordnet. Eine Anordnung an einer anderen Position innerhalb der Reinigungsvorrichtung 12 ist ebenfalls denkbar. Vorzugsweise ist die Brenneinrichtung 26 an einer Position innerhalb der Reinigungsvorrichtung 12 angeordnet, beispielsweise stromabwärts eines ersten regenerativen Wärmetauschers zum Vorwärmen des Gasstroms. Vorzugsweise ist innerhalb der Reinigungsvorrichtung 12 stromabwärts des ersten Wärmetauschers ein zweiter regenerativer Wärmetauscher zur Abkühlung des Gasstroms angeordnet. Die Brenneinrichtung 26 ist mit einer Brennstoffzuführung 28 verbunden, mittels welcher Brennstoff der Brenneinrichtung zugeführt ist. Die Brennstoffzuführung 28 ist beispielhaft außerhalb der Reinigungsvorrichtung 12 angeordnet, wobei die Anordnung innerhalb der Reinigungsvorrichtung 12 bevorzugt ist.

Innerhalb der mit dem Gaseinlass 14 verbundenen Leitung 18 strömt ein Gasstrom 20 in Pfeilrichtung der Fig. 1 in Richtung des Gaseinlasses 14 der Reinigungsvorrichtung 12. Bei dem Gasstrom handelt es sich beispielsweise um ein Abgas einer Zementherstellungsanlage, eines Kalkofens oder einer weiteren Anlage zur thermischen Behandlung von mineralischen Materialien. Innerhalb der Leitung 18 und in Strömungsrichtung des Gasstroms 20 vor der Reinigungsvorrichtung 12 ist eine erste Messeinrichtung 30 angeordnet. Mit der ersten Messeinrichtung 30 ist die Konzentration von Kohlenwasserstoffen und/oder Kohlenmonoxid in dem Gasstrom 20 ermittelbar.

Innerhalb der mit dem Gasauslass 16 verbundenen Leitung 22 strömt ein Gasstrom 22 in Pfeilrichtung der Fig. 1 weg von dem Gasauslass 16 der Reinigungsvorrichtung 12. Bei dem Gasstrom 24 handelt es sich insbesondere um einen zumindest teilweise gereinigten Gasstrom, wobei die Konzentration von Kohlenwasserstoffen und/oder Kohlenmonoxid in dem Gasstrom 24 geringer ist als in dem Gasstrom 20 vor dem Eintritt in die Reinigungsvorrichtung 12. Innerhalb der Leitung 22 ist in Strömungsrichtung des Gasstroms 24 stromabwärts des Gasauslasses 16 eine zweite Messeinrichtung 32 angeordnet, die die Konzentration von Kohlenwasserstoffen und/oder Kohlenmonoxid in dem gereinigten Gasstrom 24 ermittelt.

Beispielsweise handelt es sich bei der ersten und der zweiten Messeinrichtung 30, 32 um einen Infrarot-Analysator zur CO Bestimmung oder Flammenionisationsdetektor zur Kohlenwasserstoffbestimmung. Es ist ebenfalls denkbar, dass lediglich eine Messeinrichtung 30, 32 der ersten und der zweiten Messeinrichtung 30, 32 in dem System 10 vorgesehen ist.

Im Betrieb des Systems 10 zum Reinigen eines Gasstroms wird ein mit Kohlenwasserstoffen und/oder Kohlenmonoxid beladener Gasstrom in die Reinigungsvorrichtung 12 geführt und innerhalb der Reinigungsvorrichtung 12 von Kohlenwasserstoffen und/oder Kohlenmonoxid gereinigt. Beispielsweise umfasst die Reinigungsvorrichtung 12 eine Vorrichtung zur regenerativen katalytischen Oxidation (RCO) und/oder eine Vorrichtung zur regenerativen thermischen Oxidation (RTO). Bei der regenerativen katalytischen Oxidation sowie auch bei der regenerativen thermischen Oxidation wird Kohlenwasserstoff und/oder Kohlenmonoxid zu Wasser und Kohlenstoffdioxid oxidiert. Diese Oxidation findet bei der regenerativen katalytischen Oxidation mit Hilfe eines Katalysators, wie beispielsweise einem keramischen Grundkörper mit Edelmetallen als aktive Komponente statt. Die Temperatur, bei welcher eine solche regenerative katalytische Oxidation stattfindet beträgt üblicherweise 200-600°C. Bei der thermischen Oxidation findet die Oxidation bei einer Temperatur von etwa 800-1100°C insbesondere 800-900°C statt. In einem autothermen Betrieb der Vorrichtung zur regenerativen thermischen Oxidation wird die zur Oxidation der Kohlenwasserstoffe und/oder Kohlenmonoxid benötigte Energie zumindest teilweise oder vollständig durch die Oxidation der Kohlenwasserstoff-und/oder Kohlenmonoxidbestandteile im Gasstrom innerhalb der Reinigungsvorrichtung 12 bereitgestellt. Bei einem autothermen Betrieb der RTO ist ein Gasstrom mit einer hohen Konzentration von insbesondere Kohlenmonoxid erforderlich, wobei gleichzeitig Emissionsgrenzwerte in dem gereinigten Gasstrom 24 von beispielsweise 50mg/Nm³ eingehalten werden müssen. Um die Konzentration von Kohlenwasserstoffen und/oder Kohlenmonoxid zuverlässig auf den erwähnten Grenzwert zu reduzieren ist auch bei der regenerativen thermischen Oxidation eine Brenneinrichtung 26 zur Zuführung von Wärme in die Reinigungsvorrichtung 12 vorgesehen.

Das System 10 weist des Weiteren eine Steuerungs-/Regelungseinrichtung 34 auf, die mit der ersten und der zweiten Messeinrichtung 30, 32 sowie mit der Brennstoffzuführung 28 in Verbindung steht. Die Messeinrichtungen 30, 32 sind derart mit der Steuerungs-/Regelungseinrichtung 34 verbunden, dass die mittels der Messeinrichtungen 30, 32 ermittelten Konzentrationen von Kohlenwasserstoffen und/oder Kohlenmonoxid in dem Gasstrom 24, 22 an die Steuerungs-/Regelungseinrichtung 34 übermittelt werden. Die Brennstoffzuführung 28 steht mit der Steuerungs-/Regelungseinrichtung 34 in Verbindung, sodass die Steuerungs-/Regelungseinrichtung 34 die Brennstoffzufuhr, insbesondere die Menge an Brennstoff, die der Brenneinrichtung 26 zugeführt wird, in Abhängigkeit der mittels mindestens einer der Messeinrichtungen 30, 32 ermittelten Konzentration an Kohlenwasserstoffen und/oder Kohlenmonoxid steuert/ regelt.

Bei einer Reinigungsvorrichtung 12, die eine Oxidation der Kohlenwasserstoffe und/oder Kohlenmonoxid mittels der regenerativen thermischen Oxidation durchführt, ist bei einer relativ hohen Konzentration an Kohlenwasserstoffen und/oder Kohlenmonoxid in dem Gasstrom 20 eine geringere Wärmezufuhr in die Reinigungsvorrichtung notwendig als bei einer relativ geringen Konzentration an Kohlenwasserstoffen und/oder Kohlenmonoxid. Ebenso verhält es sich bei der regenerativen katalytischen Oxidation. Eine Regelung/ Steuerung der Brennstoffzufuhr, insbesondere der Wärmezufuhr in die Reinigungsvorrichtung 12 in Abhängigkeit der ermittelten Konzentration von Kohlenwasserstoffen und/oder Kohlenmonoxid in dem Gasstrom stromaufwärts der Reinigungsvorrichtung 12 ermöglicht daher eine optimale Einstellung der Temperatur innerhalb der Reinigungsvorrichtung 12, sodass die Konzentration an Kohlenwasserstoffen und/oder Kohlenmonoxid auf einen Wert unterhalb des Grenzwertes reduziert werden kann. Wird mittels der zweiten Messeinrichtung 32 stromabwärts der Reinigungsvorrichtung 12 eine Konzentration an Kohlenwasserstoffen und/oder Kohlenmonoxid ermittelt, die oberhalb eines bestimmten Grenzwertes von beispielsweise etwa 30 - 80mg/Nm³, vorzugsweise 50 mg/Nm³ liegt, wird die Brennstoffzufuhr, insbesondere die Wärmezufuhr in die Reinigungsvorrichtung 12 erhöht.

Das System weist außerdem eine Temperaturmesseinrichtung 36 auf, die innerhalb der Reinigungsvorrichtung 12 angeordnet ist und die Temperatur des Gasstroms innerhalb der Reinigungsvorrichtung 12 ermittelt. Die Temperaturmesseinrichtung 36 ist ebenfalls mit der Steuerungs-/Regelungseinrichtung 34 verbunden, sodass die ermittelte Temperatur innerhalb der Reinigungsvorrichtung 12 an die Steuerungs-/Regelungseinrichtung 34 übermittelt wird. Die Wärmezufuhr in die Reinigungsvorrichtung 12 wird in Abhängigkeit der ermittelten Temperatur durch die Steuerungs-/Regelungseinrichtung 34 gesteuert/ geregelt. Die Steuerungs-/Regelungseinrichtung 34 steuert/ regelt in Abhängigkeit der ermittelten Temperatur die Brennstoffzufuhr der Brennstoffzuführung 28 an die Brenneinrichtung 26. Liegt die durch die Temperaturmesseinrichtung 36 ermittelte Temperatur beispielsweise innerhalb der Reinigungsvorrichtung 12 unterhalb eines bestimmten Grenzwertes, wird die Brennstoffzufuhr an die Brenneinrichtung 26, insbesondere die Wärmezufuhr in die Reinigungsvorrichtung 12 erhöht. Der Grenzwert für eine solche Temperatur kann sich für eine Reinigungsvorrichtung 12, die nach der regenerativen katalytischen Oxidation arbeitet, von einem Grenzwert einer Reinigungsvorrichtung 12, die nach der regenerativen thermischen Oxidation arbeitet, unterscheiden.

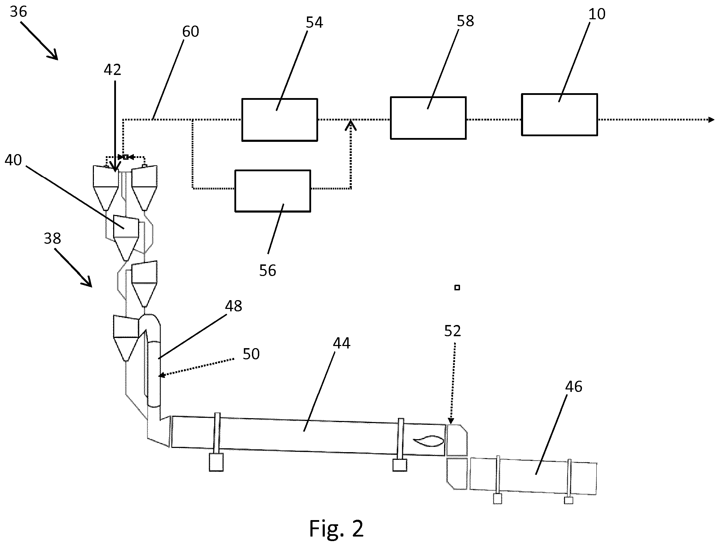

Fig. 2 zeigt eine Zementherstellungsanlage 36 mit einem System 10 zum Reinigen eines Gasstroms gemäß der Fig. 1. Die Zementherstellungsanlage 36 weist einen Vorwärmer 38 mit einer Mehrzahl von Zyklonen 40 zur Trennung von Rohmehl 42 von einem Gasstrom. Der Vorwärmer 38 der Fig. 2 weist beispielhaft fünf Zyklonen auf die in vier Zyklonenstufen in Strömungsrichtung des Rohmehls 42 hintereinander angeordnet sind. Das Rohmehl 42 wird in die erste, beispielhaft aus zwei Zyklonen 40 bestehende Zyklonenstufe aufgegeben und durchläuft den Vorwärmer von oben nach unten. An den Vorwärmer 38 schließt sich in Strömungsrichtung des Rohmehls 42 ein Ofen 44, insbesondere ein Drehrohrofen, an. In dem Ofen wird das in dem Vorwärmer 38 vorgewärmte Rohmehl zu Zementklinker gebrannt und anschließend in einem Kühler 46, stromabwärts des Ofens 44 gekühlt. Die Abluft des Ofens 44 wird in den Vorwärmer 38 geleitet und durchströmt diesen im Querstrom zu dem Rohmehl, sodass dieses durch die Abluft des Ofens 44 erwärmt wird. In dem Vorwärmer 38 ist optional ein Calcinator 48 angeordnet. Der Calcinator ist beispielhaft zwischen der dritten und vierten Zyklonstufe in Strömungsrichtung des Rohmaterials vor dem Ofen 44 angeordnet und weist eine Feuerung auf. Der Calcinator 48 sorgt für eine zumindest teilweise Entsäuerung des Rohmehls 42 vor dem Eintritt in den Ofen 44. Der Calcinator 48 weist eine Calcinator-Brennstoffzufuhr 50 auf, über welche Brennstoff einer Brenneinrichtung innerhalb des Calcinators 48 zugegeben wird. Auch der Ofen 44 weist eine Ofen-Brennstoffzufuhr 52 auf, über welche Brennstoff einer Brenneinrichtung innerhalb des Ofens 44 zugeführt wird.

Die Zementherstellungsanlage 36 weist des Weiteren einen dem Vorwärmer in Strömungsrichtung des Ofenabgases nachgeschaltete Mahleinrichtung 54, sowie eine der Mahleinrichtung 54 parallelgeschaltete Kühleinrichtung 56, wie beispielsweise einen Kühlturm, auf. Der Mahleinrichtung 54 und der Kühleinrichtung ist eine Entstaubungsvorrichtung 58, wie beispielsweise ein Filter oder ein Zyklon, nachgeschaltet. An die Entstaubungsvorrichtung 58 schließt sich in Strömungsrichtung des Abgases ein System 10 zum Reinigen eines Gasstroms gemäß Fig. 1 an.

Im Betrieb der Zementanlage 36 strömt der den Vorwärmer 38 verlassende Gasstrom 60 zunächst durch eine Mahleinrichtung 54, in der beispielsweise Rohmaterialien wie Kalkstein oder mineralisches Gestein aus einem Tagebau gemahlen werden und trocknet durch die vorhandene Wärme im Gasstrom 60 gleichzeitig das Mahlgut. Wahlweise wird der Gasstrom zumindest teilweise oder vollständig der Kühleinrichtung 56 oder der Mahleinrichtung 54 zugeführt. Der Gasstrom wird anschließend in der Entstaubungseinrichtung 58 entstaubt und dem System 10 zum Reinigen des Gasstroms zugeführt. Das Zuführen eines entstaubten Gasstroms 60 zu dem System 10 zum Reinigen des Gasstroms 60 hat den Vorteil, dass ein Verstopfen der Reinigungsvorrichtung 12, insbesondere des Katalysators eines RCOs vermieden wird.

Die Steuerungs-/Regelungseinrichtung 34 des Systems 10 der Fig. 2 steuert/ regelt Parameter des Zementherstellungsprozesses in Abhängigkeit der mittels der ersten und/ oder der zweiten Messeinrichtung 30,32 und/oder der Temperaturmesseinrichtung 36 ermittelten Temperatur innerhalb der Reinigungsvorrichtung 12 steuern/ regeln. Bei solchen Parametern des Zementherstellungsprozesses handelt es sich beispielsweise um die Calcinator-Brennstoffzufuhr 50 zu den Calcinator 48 oder um die Ofen-Brennstoffzufuhr 52 zu dem Ofen 44. Beispielsweise wird bei einer mittels der ersten Messeinrichtung 30 oder der zweiten Messeinrichtung 32 ermittelten geringen Konzentration an Kohlenwasserstoffen und/ oder Kohlenmonoxid, des Gasstroms 60 in Strömungsrichtung des Gasstroms 60 vor oder nach der Reinigungsvorrichtung 12 die Menge an Brennstoff zu dem Ofen 44 und/ oder dem Calcinator 48 erhöht. Es ist ebenfalls denkbar, den Kohlenstoffanteil des Brennstoffs durch Variation der Zusammensetzung eines Brenstoffmixes zu dem Calcinator 48 und/ oder zu dem Ofen 44 in Reaktion auf die ermittelte Konzentration von Kohlenwasserstoffen und/oder Kohlenmonoxid zu verändern. Beispielsweise wird der Kohlenstoffanteil der Brennstoffe in Reaktion auf eine hohe Konzentration von Kohlenwasserstoffen und/oder Kohlenmonoxid in dem Gasstrom 60 stromabwärts der Reinigungsvorrichtung 12 verringert, insbesondere werden Brennstoffe mit unterschiedlichen Kohlenstoffgehalten oder Zündtemperaturen eingesetzt, welches zu einem steigen Schlupf unvollständig verbrannter Kohlenstoffverbindungen führt, verwendet.

Beispielsweise wird die Menge an Rohmaterial 42, die in den Vorwärmer 38 aufgegeben wird in Abhängigkeit der ermittelten Konzentration an Kohlenwasserstoffen und/oder Kohlenmonoxid in dem Gasstrom 60 stromaufwärts oder stromabwärts der Reinigungsvorrichtung 12 gesteuert/ geregelt. Wird eine relativ hohe Konzentration von Kohlenwasserstoffen und/oder Kohlenmonoxid in dem Gasstrom 60 stromabwärts der Reinigungsvorrichtung 12 ermittelt, wird der Kohlenstoffgehalt des Rohmaterials 42 verringert.

Eine relativ hohe Konzentration von Kohlenwasserstoffen und/oder Kohlenmonoxid in dem Gasstrom 60, insbesondere höher als ein Grenzwert von etwa 500 - 10000 mg/Nm³, vorzugsweise 5000 - 8000 mg/Nm³, insbesondere 6000 mg/Nm³, ermöglicht einen nahezu autothermen Betrieb der Reinigungsvorrichtung 12, sodass eine sehr geringe Zufuhr von Wärme in die Reinigungsvorrichtung 12 notwendig ist. Die Steuerungs-/Regelungseinrichtung 34 ist daher vorzugsweise derart ausgebildet, dass sie die Zufuhr von Brennstoffen und den Ofen 44 und/ oder den Calcinator 48, sowie der Kohlenstoffgehalt des Rohmehls 42 und/ oder Brennstoffe zu dem Ofen 44 und/ oder dem Calcinator 48 bei Überschreiten oder Unterschreiten eines bestimmten Grenzwertes oder eines bestimmten Konzentrationsbereichs von Kohlenwasserstoffen und/oder Kohlenmonoxid vor oder nach der Reinigungsvorrichtung 12 entsprechend erhöht oder verringert.

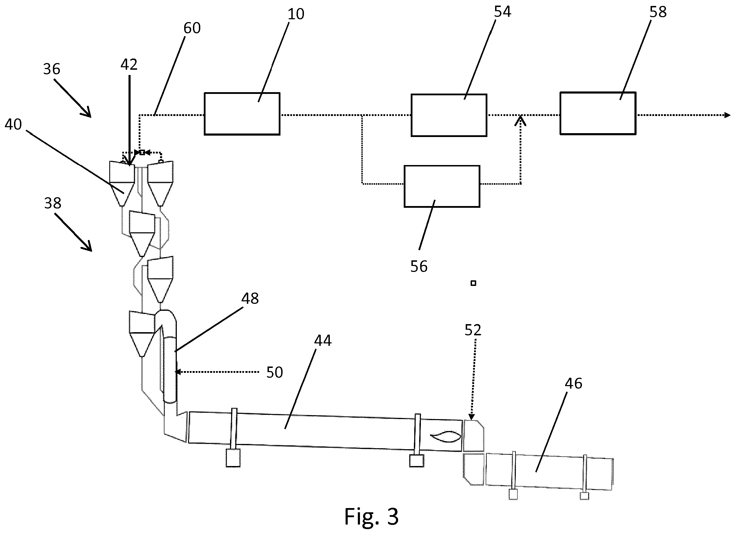

Fig. 3 zeigt ein weiteres Ausführungsbeispiel der Zementherstellungsanlage 36, das im Wesentlichen der Fig. 2 entspricht mit dem Unterschied, dass das System 10 zum Reinigen des Gasstroms 60 direkt stromabwärts des Vorwärmers 36 angeordnet ist. Vorzugsweise ist zwischen dem Auslass des Vorwärmers 38 und dem Einlass in das System 10 ein Hochtemperaturfilter zum Abscheiden von Staub angeordnet. Im Anschluss an das System 10 ist eine Mahleinrichtung 54 und eine zu dieser parallel geschaltete Kühleinrichtung 56 angeordnet, sodass der das System 10 verlassende Gasstrom wahlweise der Mahleinrichtung 54 und/ oder der Kühleinrichtung 56 zugeführt wird. Im Anschluss an die Kühlung des Gasstroms in der Mahleinrichtung 54 oder der Kühleinrichtung 56 findet eine Entstaubung des Gasstroms in der Entstaubungseinrichtung 58 statt. Anschließend wir der Gasstrom beispielsweise in die Umgebung entlassen.

In den Ausführungsbeispielen der Fig. 2 und 3 ist es ebenfalls denkbar, dass dem System 10 jeweils ein zweites System 10 nachgeschaltet ist. Beispielsweise umfasst das erste System 10 eine Reinigungsvorrichtung 12, die eine Reinigung des Gasstroms mit der regenerativen thermischen Oxidation durchführt. Das zweite, nachgeschaltete System 10 umfasst eine Reinigungsvorrichtung 12, die eine Reinigung des Gasstroms mit der regenerativen katalytischen Oxidation durchführt. Eine Reihenschaltung zweier Systeme 10 zur Reinigung des Gasstroms stellt eine zuverlässige Reinigung des Gasstroms sicher, wobei beispielsweise die in der RTO nicht vollständig oxidierten Kohlenwasserstoffe und/oder Kohlenmonoxid anschließend einer RCO zugeführt werden, die eine geringere Temperatur benötigt und eine Oxidation der restlichen Kohlenwasserstoffe und/oder Kohlenmonoxid ermöglicht. Es ist ebenfalls möglich eine Reinigungsvorrichtung 12 mit einem RTO zusätzlich mit einem Katalysator zur katalytischen Oxidation auszustatten, sodass die thermische und die katalytische Oxidation nacheinander ablaufen können. Außerdem ist es möglich in einem Bereich innerhalb der Reinigungsvorrichtung mit einem geeigneten Temperaturfenster zusätzlich Reduktionskatalysatoren einzubauen, um Stickoxide und Ammoniak zu mindern.

### Bezugszeichenliste

10 System zum Reinigen eines Gasstroms
12 Reinigungsvorrichtung
14 Gaseinlass
16 Gasauslass
18 Leitung
20 Gasstrom
22 Leitung
24 gereinigter Gasstrom
26 Brenneinrichtung
28 Brennstoffzuführung
30 erste Messeinrichtung
32 zweite Messeinrichtung
34 Steuerungs-/Regelungseinrichtung
36 Zementherstellungsanlage
38 Vorwärmer
40 Zyklon
42 Rohmehl
44 Ofen
46 Kühler
48 Calcinator
50 Calcinator-Brennstoffzufuhr
52 Ofen-Brennstoffzufuhr
54 Mahleinrichtung
56 Kühleinrichtung
58 Entstaubungsvorrichtung
60 Gasstrom

## Patentansprüche

1. Verfahren zum Reinigen eines Gasstroms (20; 60), wobei der Gasstrom (20; 60) in einer Reinigungsvorrichtung (12) mittels regenerativer thermischer Oxidation und/ oder regenerativer katalytischer Oxidation behandelt wird und
wobei Rohmaterial (42) in einem Vorwärmer (38) vorgewärmt und/oder in einem Calcinator (48) entsäuert wird und
wobei das vorgewärmte und/oder entsäuerte Rohmaterial (42) in einem Ofen (44) zu Zementklinker gebrannt wird und der Gasstrom (20; 60) aus dem Abgasstrom des Ofens (44) und/ oder des Calcinators (48) gebildet wird,
das Verfahren zumindest die Schritte aufweist:
- Ermitteln der Konzentration von Kohlenwasserstoffen und/oder Kohlenmonoxid in dem Gasstrom (20; 60) und
- Zuführen von Wärme in den Gasstrom (20; 60) mittels einer innerhalb der Reinigungsvorrichtung (12) angeordneten Brenneinrichtung (26), wobei die Wärmezufuhr in Abhängigkeit der ermittelten Konzentration von Kohlenwasserstoffen und/oder Kohlenmonoxid gesteuert/ geregelt wird
- Zuführen von Brennstoff zu dem Ofen (44) und/ oder dem Calcinator (48) und
- Steuern/ Regeln der Brennstoffzufuhr zu dem Ofen (44) und/ oder dem Calcinator (48) in Abhängigkeit der ermittelten Konzentration von Kohlenwasserstoffen und/oder Kohlenmonoxid in dem Gasstrom (20; 60), wobei die ermittelte Konzentration von Kohlenwasserstoffen und/oder Kohlenmonoxid in dem Gasstrom (20; 60) mit einem vorbestimmten Grenzwert verglichen wird und bei einem Überschreiten des Grenzwertes die Wärmezufuhr in den Gasstrom erhöht und/ oder der Kohlenstoffgehalt des Rohmaterials und/ oder des Brennstoffs verringert und/ oder die Brennstoffzufuhr zu dem Ofen und/ oder dem Calcinator variiert wird.

2. Verfahren nach Anspruch 1, wobei die Temperatur des Gasstroms (20; 60) in der Reinigungsvorrichtung (12) ermittelt wird und die Wärmezufuhr in Abhängigkeit der ermittelten Temperatur gesteuert/ geregelt wird.

3. Verfahren nach einem der vorangehenden Ansprüche, und der Gasstrom (20; 60) aus dem Abgasstrom des Ofens (44) gebildet wird, wobei das Verfahren den weiteren Schritt aufweist:
Steuern/ Regeln des Kohlenstoffgehalts des Rohmaterials (42), das in den Vorwärmer (38), den Ofen (44) und/ oder den Calcinator (48) aufgegeben wird, in Abhängigkeit der ermittelten Konzentration von Kohlenwasserstoffen und/oder Kohlenmonoxid in dem Gasstrom (20; 60).

4. Verfahren nach einem der vorangehenden Ansprüche, wobei die Konzentration von Kohlenwasserstoffen und/oder Kohlenmonoxid in dem Gasstrom (20; 60) in Strömungsrichtung des Gasstroms (20; 60) stromabwärts der Reinigungsvorrichtung (12) ermittelt wird.

5. Verfahren nach einem der vorangehenden Ansprüche, wobei die Konzentration von Kohlenwasserstoffen und/oder Kohlenmonoxid in dem Gasstrom (20; 60) in Strömungsrichtung des Gasstroms (20; 60) stromaufwärts der Reinigungsvorrichtung (12) ermittelt wird.

6. Verfahren nach einem der vorangehenden Ansprüche, wobei der Gasstrom (20; 60) in der Reinigungsvorrichtung (12) mittels regenerativer thermischer Oxidation und anschließend mittels regenerativer katalytischer Oxidation behandelt wird

7. Verfahren nach einem der vorangehenden Ansprüche, wobei der Gasstrom (20; 60) vor dem Eintritt in die Reinigungsvorrichtung (12) gekühlt und/ oder entstaubt wird.

8. Zementherstellungsanlage aufweisend ein System zum Reinigen eines Gasstroms (20; 60), wobei das System eine Reinigungsvorrichtung (12), die derart ausgebildet ist, dass sie den Gasstrom (20; 60) mittels regenerativer thermischer Oxidation und/oder regenerativer katalytischer Oxidation behandelt, und eine Messeinrichtung (30, 32) zum Ermitteln der Konzentration von Kohlenmonoxid und/ oder Kohlenwasserstoffen in dem Gasstrom (20; 60) aufweist,
wobei die Reinigungsvorrichtung (12) eine Brenneinrichtung (26) zur Zufuhr von Wärme in den Gasstrom (20; 60) aufweist und wobei eine Steuerungs-/ Regelungseinrichtung (34) vorgesehen ist, die derart ausgebildet ist, dass sie die Wärmezufuhr in Abhängigkeit der mittels der Messeinrichtung ermittelten Konzentration von Kohlenmonoxid und/ oder Kohlenwasserstoffen steuert/ regelt,
wobei die Zementherstellungsanlage einen Vorwärmer (38) zum Vorwärmen von Rohmaterial (42), einem Ofen (44) zum Brennen des Rohmaterials (42) zu Klinker und/oder einem Calcinator (48) zum Entsäuern des Rohmaterials (42) aufweist, wobei der Gasstrom (20; 60) durch das Abgas des Ofens (44) gebildet wird und wobei der Ofen (44) und der Calcinator (48) jeweils eine Brennstoffzufuhr zur Zuführung von Brennstoff in den Calcinator (48) und den Ofen (44) aufweist und die Steuerungs-/ Regelungseinrichtung (34) derart ausgebildet ist, dass sie die ermittelte Konzentration von Kohlenwasserstoffen und/oder Kohlenmonoxid in dem Gasstrom (20; 60) mit einem vorbestimmten Grenzwert vergleicht und bei einem Überschreiten des Grenzwertes die Wärmezufuhr in den Gasstrom erhöht und/ oder der Kohlenstoffgehalt des Rohmaterials und/ oder des Brennstoffs verringert und/ oder die Brennstoffzufuhr zu dem Ofen und/ oder dem Calcinator variiert.

9. Zementherstellungsanlage nach Anspruch 8, wobei die Steuerung-/ Regelungseinrichtung (34) derart ausgebildet ist, dass sie den Kohlenstoffgehalt des Rohmaterials in den Vorwärmer (38), den Ofen (44) und/ oder den Calcinator (48) in Abhängigkeit der ermittelten Konzentration von Kohlenwasserstoffen und/oder Kohlenmonoxid in dem Gasstrom (20; 60) steuert/ regelt.

10. Zementherstellungsanlage nach Anspruch 8 oder 9, wobei die Messeinrichtung (32) in Strömungsrichtung des Gasstroms (20; 60) stromabwärts der Reinigungsvorrichtung (12) angeordnet ist.

11. Zementherstellungsanlage nach einem der Ansprüche 8 bis 10, wobei die Messeinrichtung (30) in Strömungsrichtung des Gasstroms (20; 60) stromaufwärts der Reinigungsvorrichtung (12) angeordnet ist.

## Claims

1. Process for purifying a gas stream (20; 60), wherein the gas stream (20; 60) is treated by means of regenerative thermal oxidation and/or regenerative catalytic oxidation in a purification apparatus (12) and
raw material (42) is preheated in a preheater (38) and/or deacidified in a calciner (48) and
the preheated and/or deacidified raw material (42) is fired in a furnace (44) to give cement clinker and the gas stream (20; 60) is formed by the exhaust gas stream of the furnace (44) and/or of the calciner (48),
and the process comprises at least the steps:
- determination of the concentration of hydrocarbons and/or carbon monoxide in the gas stream (20; 60) and
- introduction of heat into the gas stream (20; 60) by means of a burning device (26) arranged within the purification apparatus (12), where the introduction of heat is controlled/regulated as a function of the measured concentration of hydrocarbons and/or carbon monoxide,
- introduction of fuel into the furnace (44) and/or the calciner (48) and
- control/regulation of the introduction of fuel into the furnace (44) and/or the calciner (48) as a function of the measured concentration of hydrocarbons and/or carbon monoxide in the gas stream (20; 60), where the measured concentration of hydrocarbons and/or carbon monoxide in the gas stream (20; 60) is compared with a predetermined limit value and if the limit value is exceeded the introduction of heat into the gas stream is increased and/or the carbon content of the raw material and/or of the fuel is decreased and/or the introduction of fuel into the furnace and/or the calciner is varied.

2. Process according to Claim 1, wherein the temperature of the gas stream (20; 60) in the purification apparatus (12) is determined and the introduction of heat is controlled/regulated as a function of the measured temperature.

3. Process according to either of the preceding claims, wherein the gas stream (20; 60) is formed by the exhaust gas stream from the furnace (44) and the process comprises the further step:
control/regulation of the carbon content of the raw material (42) which is fed into the preheater (38), the furnace (44) and/or the calciner (48) as a function of the measured concentration of hydrocarbons and/or carbon monoxide in the gas stream (20; 60).

4. Process according to one of the preceding claims, wherein the concentration of hydrocarbons and/or carbon monoxide in the gas stream (20; 60) is determined downstream, in the flow direction of the gas stream (20; 60), of the purification apparatus (12).

5. Process according to any of the preceding claims, wherein the concentration of hydrocarbons and/or carbon monoxide in the gas stream (20; 60) is determined upstream, in the flow direction of the gas stream (20; 60), of the purification apparatus (12).

6. Process according to any of the preceding claims, wherein the gas stream (20; 60) is treated by means of regenerative thermal oxidation and subsequently by means of regenerative catalytic oxidation in the purification apparatus (12).

7. Process according to any of the preceding claims, wherein the gas stream (20; 60) is cooled and/or subjected to duct removal before entry into the purification apparatus (12).

8. Cement production plant comprising a system for purifying a gas stream (20; 60), wherein the system comprises a purification apparatus (12) which is configured for treating the gas stream (20; 60) by means of regenerative thermal oxidation and/or regenerative catalytic oxidation and a measuring device (30, 32) for determining the concentration of carbon monoxide and/or hydrocarbons in the gas stream (20; 60) and
the purification apparatus (12) comprises a burning device (26) for introducing heat into the gas stream (20; 60) and there is a control/regulation device (34) which is configured so as to control/regulate the introduction of heat as a function of the concentration of carbon monoxide and/or hydrocarbons determined by means of the measuring device and the cement production plant comprises a preheater (38) for preheating raw material (42), a furnace (44) for firing the raw material (42) to give clinker and/or a calciner (48) for deacidifying the raw material (42), where the gas stream (20; 60) is formed by the exhaust gas from the furnace (44) and the furnace (44) and the calciner (48) each have a fuel feed device for introducing fuel in to the calciner (48) and the furnace (44) and the control/regulation device (34) is configured for comparing the measured concentration of hydrocarbons and/or carbon monoxide in the gas stream (20; 60) with a predetermined limit value and when the limit value is exceeded increasing the introduction of heat into the gas stream and/or decreasing the carbon content of the raw material and/or of the fuel and/or varying the introduction of fuel into the furnace and/or the calciner.

9. Cement production plant according to Claim 8, wherein the control/regulation device (34) is configured for controlling/regulating the carbon content of the raw material going into the preheater (38), the furnace (44) and/or the calciner (48) as a function of the measured concentration of hydrocarbons and/or carbon monoxide in the gas stream (20; 60).

10. Cement production plant according to Claim 8 or 9, wherein the measuring device (32) is arranged downstream, in the flow direction of the gas stream (20; 60), of the purification apparatus (12).

11. Cement production plant according to any of Claims 8 to 10, wherein the measuring device (30) is arranged upstream, in the flow direction of the gas stream (20; 60), of the purification apparatus (12).

## Revendications

1. Procédé pour la purification d'un courant gazeux (20 ; 60), dans lequel le courant gazeux (20 ; 60) est traité dans un dispositif de purification (12) au moyen d'une oxydation thermique régénérative et/ou d'une oxydation catalytique régénérative et
dans lequel un matériau brut (42) est préchauffé dans un préchauffeur (38) et/ou désacidifié dans un calcinateur (48) et
dans lequel le matériau brut préchauffé et/ou désacidifié (42) est brûlé dans un four (44) en clinker de ciment et le courant gazeux (20 ; 60) est formé à partir du courant de gaz d'échappement du four (44) et/ou du calcinateur (48),
le procédé comprenant au moins les étapes suivantes :
- la détermination de la concentration d'hydrocarbures et/ou de monoxyde de carbone dans le courant gazeux (20 ; 60) et
- l'introduction de chaleur dans le courant gazeux (20 ; 60) au moyen d'un appareil de combustion (26) agencé à l'intérieur du dispositif de purification (12), l'introduction de chaleur étant commandée/régulée en fonction de la concentration déterminée d'hydrocarbures et/ou de monoxyde de carbone,
- l'introduction de combustible dans le four (44) et/ou le calcinateur (48) et
- la commande/régulation de l'introduction de combustible au four (44) et/ou au calcinateur (48) en fonction de la concentration déterminée d'hydrocarbures et/ou de monoxyde de carbone dans le courant gazeux (20 ; 60), la concentration déterminée d'hydrocarbures et/ou de monoxyde de carbone dans le courant gazeux (20 ; 60) étant comparée à une valeur seuil prédéterminée et, en cas de dépassement de la valeur seuil, l'introduction de chaleur dans le courant gazeux étant augmentée et/ou la teneur en carbone du matériau brut et/ou du combustible étant réduite et/ou l'introduction de combustible dans le four et/ou le calcinateur étant variée.

2. Procédé selon la revendication 1, dans lequel la température du courant gazeux (20 ; 60) dans le dispositif de purification (12) est déterminée et l'introduction de chaleur est commandée/régulée en fonction de la température déterminée.

3. Procédé selon l'une quelconque des revendications précédentes, et le courant gazeux (20 ; 60) est formé à partir du courant de gaz d'échappement du four (44), dans lequel le procédé comprend l'étape supplémentaire suivante :
la commande/régulation de la teneur en carbone du matériau brut (42), qui est chargé dans le préchauffeur (38), le four (44) et/ou le calcinateur (48), en fonction de la concentration déterminée d'hydrocarbures et/ou de monoxyde de carbone dans le courant gazeux (20 ; 60).

4. Procédé selon l'une quelconque des revendications précédentes, dans lequel la concentration d'hydrocarbures et/ou de monoxyde de carbone dans le courant gazeux (20 ; 60) est déterminée en aval du dispositif de purification (12) dans la direction d'écoulement du courant gazeux (20 ; 60).

5. Procédé selon l'une quelconque des revendications précédentes, dans lequel la concentration d'hydrocarbures et/ou de monoxyde de carbone dans le courant gazeux (20 ; 60) est déterminée en amont du dispositif de purification (12) dans la direction d'écoulement du courant gazeux (20 ; 60).

6. Procédé selon l'une quelconque des revendications précédentes, dans lequel le courant gazeux (20 ; 60) est traité dans le dispositif de purification (12) au moyen d'une oxydation thermique régénérative et ensuite au moyen d'une oxydation catalytique régénérative.

7. Procédé selon l'une quelconque des revendications précédentes, dans lequel le courant gazeux (20 ; 60) est refroidi et/ou dépoussiéré avant l'entrée dans le dispositif de purification (12).

8. Unité de fabrication de ciment comprenant un système pour la purification d'un courant gazeux (20 ; 60), dans laquelle le système comprend un dispositif de purification (12), qui est configuré en ce qu'il traite le courant gazeux (20 ; 60) au moyen d'une oxydation thermique régénérative et/ou d'une oxydation catalytique régénérative, et un appareil de mesure (30, 32) pour la détermination de la concentration de monoxyde de carbone et/ou d'hydrocarbures dans le courant gazeux (20 ; 60),
dans laquelle le dispositif de purification (12) comprend un appareil de combustion (26) pour l'introduction de chaleur dans le courant gazeux (20 ; 60) et dans laquelle un appareil de commande/régulation (34) est prévu, qui est configuré en ce qu'il commande/régule l'introduction de chaleur en fonction de la concentration de monoxyde de carbone et/ou hydrocarbures déterminée au moyen de l'appareil de mesure,
dans laquelle l'unité de fabrication de ciment comprend un préchauffeur (38) pour le préchauffage d'un matériau brut (42), un four (44) pour la combustion du matériau brut (42) en clinker et/ou un calcinateur (48) pour la désacidification du matériau brut (42), dans laquelle le courant gazeux (20 ; 60) est formé par le gaz d'échappement du fou (44) et dans laquelle le four (44) et le calcinateur (48) comprennent chacun une introduction de combustible pour l'introduction de combustible dans le calcinateur (48) et/ou le four (44) et l'appareil de commande/régulation (34) est configuré de telle sorte qu'il compare la concentration déterminée d'hydrocarbures et/ou de monoxyde de carbone dans le courant gazeux (20 ; 60) à une valeur seuil prédéterminée et, en cas de dépassement de la valeur seuil, l'introduction de chaleur dans le courant gazeux est augmentée et/ou la teneur en carbone du matériau brut et/ou du combustible est réduite et/ou l'introduction de combustible au four et/ou au calcinateur est variée.

9. Unité de fabrication de ciment selon la revendication 8, dans laquelle l'appareil de commande/régulation (34) est configuré de telle sorte qu'il commande/régule la teneur en carbone du matériau brut dans le préchauffeur (38), le four (44) et/ou le calcinateur (48) en fonction de la concentration déterminée d'hydrocarbures et/ou de monoxyde de carbone dans le courant gazeux (20 ; 60).

10. Unité de fabrication de ciment selon la revendication 8 ou 9, dans laquelle l'appareil de mesure (32) est agencé en aval du dispositif de purification (12) dans la direction d'écoulement du courant gazeux (20 ; 60).

11. Unité de fabrication de ciment selon l'une quelconque des revendications 8 à 10, dans lequel l'appareil de mesure (30) est agencé en amont du dispositif de purification (12) dans la direction d'écoulement du courant gazeux (20 ; 60).
